# FASCICULE DE BREVET EUROPEEN

(11) **EP 1 990 897 B1**
(45) Date de publication et mention de la délivrance du brevet: **25.08.2010**
(21) Numéro de dépôt: 08356067.2
(22) Date de dépôt: 07.05.2008
(51) Int. Cl.: H02K 5/04, H02K 11/00

(54) **Actionneur tubulaire d'entrainement d'un écran et procédé de fabrication d'un tel actionneur**
Rohrförmiges Antriebsteil eines Bildschirms und Herstellungsverfahren eines solchen Antriebsteils
Tubular actuator for powering a screen and method for manufacturing such an actuator

(30) Priorité: 10.05.2007 FR 0703342
(43) Date de publication de la demande: 12.11.2008
(73) Titulaire: Somfy SAS, 74300 Cluses (FR)
(72) Inventeur: Beau, Stéphane, 74130 Le Mont Saxonnex (FR); Dumur, Philippe, 74230 Le Bouchet Montcharvin (FR)
(74) Mandataire: Myon, Gérard Jean-Pierre

(56) Documents cités:
- DE-A1- 19 522 622
- FR-A- 2 699 339
- FR-A- 2 740 824
- FR-A- 2 841 702
- FR-A- 2 872 196

## Description

La présente invention concerne un actionneur tubulaire entraînant un écran domotique tel qu'un volet roulant, un store, une porte enroulable ou analogue. L'invention concerne également un procédé de fabrication d'un tel actionneur.

Comme cela est connu, par exemple, de FR-A-2 841 702, un actionneur tubulaire est généralement composé d'un tube à l'intérieur duquel viennent se loger un réducteur, un frein, un moteur, et une cage, c'est à dire un sous-ensemble de commande de l'alimentation du moteur. La sortie du réducteur fait saillie à une extrémité du tube. A l'autre extrémité, la cage fait partiellement saillie par rapport au tube. La cage peut comprendre une pièce de fixation, destinée à fixer l'actionneur à un bâti et qui fait saillie par rapport au tube, et un module intégrant un moyen de contrôle de l'alimentation du moteur. Le moyen de contrôle peut être mécanique, par exemple un mécanisme de comptage interagissant avec des interrupteurs. Il peut être électronique, par exemple une carte électronique réagissant à des commandes radio, filaires ou à des variations électriques. Il peut également être électromécanique, par exemple une carte électronique réagissant à des impulsions issues d'un mécanisme de comptage.

Avant d'être définitivement installé sur site, l'actionneur peut subir des chocs lors de son transport seul ou monté dans le produit qu'il motorise.

Aussi, il est préférable que les éléments situés à l'intérieur du tube soient immobilisés afin de ne pas être détériorés, de ne pas abîmer les autres éléments ou simplement afin de rester connectés. La cage doit rester unitaire, même si elle comprend plusieurs parties. L'assemblage du module avec la pièce de fixation doit donc résister aux chocs.

Par ailleurs, il est connu de FR-A-2 872 196 de loger un moteur électrique, un dispositif de freinage, un réducteur et des moyens d'alimentation dans un carter cylindrique. Le positionnement des moyens d'alimentation dans le carter n'est pas détaillé.

Il est connu d'assembler deux parties d'une cage par vissage. Cette solution assure une bonne tenue axiale de l'assemblage. La tenue radiale du module est généralement assurée par des formes de reprise entre les deux pièces. Cette solution présente néanmoins des contraintes d'assemblages pénalisantes. La première est le temps de vissage relativement long. La seconde est un risque de détérioration du fût de vissage lorsque celui-ci est en matière plastique et que le couple de vissage est trop élevé, par exemple suite à un déréglage de la visseuse. Dans ce dernier cas, la tenue axiale est compromise.

Un autre mode de réalisation d'une cage consiste à clipper le module sur la pièce de fixation. Pour assurer la tenue axiale, des clips sont dimensionnés en conséquence. L'assemblage se révèle alors indémontable, ce qui n'est pas souhaité en cas d'intervention pour une opération de maintenance ultérieure.

L'invention propose un actionneur tubulaire comprenant une cage et son procédé d'assemblage permettant de pallier les inconvénients précédents. La cage s'assemble et se démonte rapidement. Le moyen de contrôle de l'alimentation du moteur est intégré dans un module qui est appelé boîtier dans ce qui suit. Ce boîtier est assemblé avec une pièce de fixation.

A cet effet, l'invention concerne un actionneur tubulaire d'entraînement d'un écran domotique qui comprend une pièce de fixation, permettant de rendre solidaire l'actionneur avec un bâti et partiellement disposé à l'intérieur d'un tube appartenant également à l'actionneur, ainsi qu'un boîtier dans lequel est logée au moins une partie de contrôle de l'alimentation d'un moteur appartenant à l'actionneur, le boîtier et le moteur étant disposés dans le tube précité, et ainsi que des moyens d'assemblage de la pièce de fixation et du boîtier. Cet actionneur est caractérisé en ce qu'il comprend un moyen de verrouillage des moyens d'assemblage, en configuration de solidarisation de la pièce de fixation et du boîtier, lorsque le boîtier est en place dans le tube.

Ainsi, pour sécuriser l'assemblage, et notamment sa tenue axiale selon l'axe du tube, il est prévu de verrouiller les moyens d'assemblage entre la pièce de fixation et le boîtier, une fois le boîtier inséré dans le tube. Le verrouillage consiste à maintenir les moyens d'assemblage dans une configuration permettant au boîtier et à la pièce de fixation de rester solidaires. Le verrouillage ne signifie pas seulement l'inaccessibilité des moyens d'assemblage, une fois le tube monté. Un assemblage par clipsage situé à l'intérieur du tube, donc inaccessible, mais dont le débattement du clip n'est pas limité, pourrait se déclipser suite à un choc. Dans ce cas, le clip n'est pas verrouillé. Le principe de verrouillage des moyens d'assemblage, une fois le tube assemblé, permet d'atténuer les contraintes de résistance au choc lors du dimensionnement de ces moyens. Dans le cas d'un assemblage par clipsage, le clip subit des sollicitations axiales et radiales. Si le clip est verrouillé, la contrainte radiale est alors diminuée. Le clip peut donc être dimensionné différemment.

Le verrouillage des moyens d'assemblage est activé lorsque le boîtier est dans le tube. Lorsque le boîtier n'est plus dans le tube, les moyens de verrouillage ne sont avantageusement pas actifs. Le démontage de la cage peut donc être simplifié pour une intervention de type SAV. Pour le faciliter, on peut prévoir des moyens d'assemblage ne nécessitant pas d'outil. Par exemple, on remplace le vissage du boîtier par une solution clippée.

Le moyen de verrouillage précité est, de préférence, constitué par une partie du tube de l'actionneur.

De façon avantageuse, les moyens d'assemblage utilisés sont constitués d'au moins un clip solidaire d'un premier élément parmi le boîtier et la pièce de fixation, ce clip coopérant avec un logement d'accroche ménagé sur le deuxième élément parmi cette pièce et ce boîtier, de manière à maintenir le boîtier assemblé à la pièce de fixation.

Le clip comprend avantageusement un talon disposé de manière à tenir en appui contre la surface intérieure du tube, qui forme le moyen de verrouillage, lorsque le boîtier et la pièce de fixation sont soumis à un effort de désolidarisation. En d'autres termes, pour simplifier la fonction de verrouillage, une solution préférentielle consiste à utiliser directement la surface intérieure du tube comme moyen de verrouillage. Il n'y a donc pas besoin de pièces supplémentaires pour assurer cette fonction. Le débattement du clip est limité par le tube.

Le clip peut comprendre une patte élastique et une protubérance ménagée à une extrémité libre de cette patte, la protubérance étant conformée et orientée pour être engagée dans le logement mentionné ci-dessus, en configuration verrouillée du clip. En particulier, la protubérance peut être pourvue d'une pente d'attaque destinée à faciliter la déformation radiale de la patte lors de la solidarisation du boîtier et de la pièce de fixation.

De façon avantageuse, il est prévu des moyens d'immobilisation de la partie de contrôle dans ou sur le boîtier, ces moyens d'immobilisation étant activés avant que le boîtier soit mis en place dans le tube ou lorsque le boîtier est mis en place dans le tube.

L'invention concerne également un procédé de fabrication d'un actionneur tubulaire tel que mentionné ci-dessus et, plus spécifiquement, un procédé qui comprend des étapes consistant à :
a) assembler, au moyen de clips élastiques formant moyens d'assemblage, la pièce de fixation et le boîtier et
b) insérer l'assemblage formé à l'étape précédente dans le tube, en verrouillant les clips en configuration de solidarisation de la pièce de fixation et du boîtier, grâce à un moyen de verrouillage de ces clips.

Selon un premier mode de réalisation du procédé de l'invention, celui-ci peut comprendre des étapes antérieures aux étapes a) et b) et consistant à :
c) assembler par clipsage la partie de contrôle et un support
d) assembler par clipsage un couvercle sur le support équipé de la partie de contrôle, en mettant en oeuvre des moyens de verrouillage de la partie de contrôle sur le support,
alors que lors de l'étape a), on met en oeuvre des moyens de verrouillage du couvercle sur le support.

Selon une variante du procédé de l'invention, celui-ci comprend une étape antérieure aux étapes a) et b) consistant à :
c') assembler par clipsage la partie de contrôle et un support, alors que lors de l'étape a), on met en oeuvre des moyens de verrouillage de la partie de contrôle sur le support.

Avantageusement, les moyens de verrouillage rendant indémontable l'immobilisation de la partie de contrôle précitée sur le support sont activés lorsque le couvercle est assemblé avec le support équipé ou lorsque le support équipé est assemblé avec la pièce de fixation.

Lorsque le moyen de contrôle est protégé par un couvercle, les moyens de verrouillage rendant indémontable l'immobilisation du couvercle sur le support sont activés lorsque le boîtier, formé du support équipé et du couvercle, est assemblé avec la pièce de fixation.

En d'autres termes, la même logique de verrouillage des moyens d'assemblage peut être appliquée à l'assemblage de la cage proprement dite. On obtient alors le verrouillage successif des différents moyens d'assemblage des éléments constitutifs de la cage, au fur et à mesure que celle-ci est assemblée. Par exemple, une carte électronique est clippée sur un support, le clipsage d'un couvercle verrouille les clips de l'assemblage précédent, ce sous-ensemble est alors clippé sur la pièce de fixation, verrouillant ainsi les clips de l'assemblage précédent et enfin la cage est insérée dans le tube qui verrouille alors les clips de l'assemblage précédent. Bien entendu, certaines étapes peuvent être supprimées en fonction de la conception de la cage. Ce procédé présente l'avantage, d'une part, de sécuriser l'assemblage de la cage et, d'autre part, de faciliter sa réalisation ou son démontage. Il serait ainsi possible d'assembler ou de démonter la cage sans l'aide d'outils.

L'invention sera mieux comprise à la lecture de la description qui va suivre, donnée uniquement à titre d'exemple et faite en se référant aux dessins annexés sur lesquels :
- la figure 1 est une illustration schématique de l'architecture d'un actionneur tubulaire conforme à l'invention ;
- la figure 2 est une vue à plus grande échelle du détail A de la figure 1 ;
- la figure 3 est un ordinogramme d'un premier mode d'assemblage de la cage selon l'invention ;
- la figure 4 est un ordinogramme d'un deuxième mode d'assemblage de la cage ;
- les figures 5 à 9 sont des vues en perspective représentant les différentes étapes du premier mode d'assemblage de la cage selon l'invention.

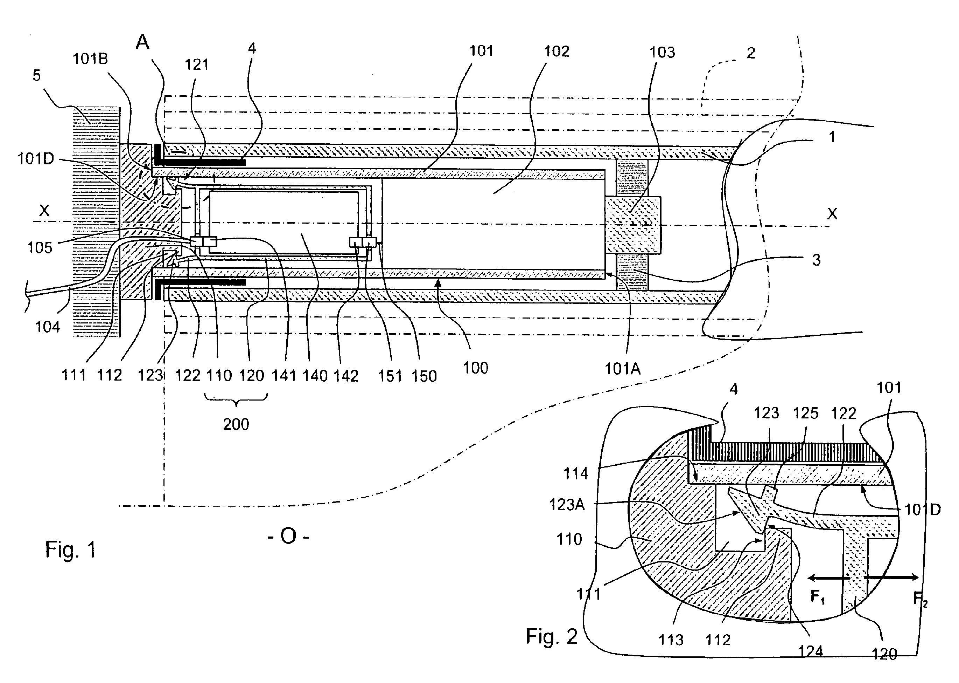

La figure 1 représente un actionneur tubulaire 100 destiné à entraîner un tube d'enroulement 1 sur lequel peut être plus ou moins enroulé un tablier 2 d'obturation d'une ouverture O. Le tube 1 est entraîné par l'actionneur 100 en rotation autour d'un axe de révolution X-X qui est disposé horizontalement en partie haute de l'ouverture. L'ouverture O est, par exemple, une ouverture ménagée dans les parois d'un bâtiment. L'actionneur 100, le tube 1 et le tablier 2 forment alors un volet roulant motorisé.

L'actionneur 100 comprend un tube cylindrique 101 dans lequel est monté un motoréducteur 102 comprenant un moteur électrique, un frein et un réducteur et équipé d'un arbre de sortie 103 qui fait saillie à une extrémité 101A du tube 101 et entraîne une couronne-roue 3 solidaire en rotation du tube 1.

Le tube d'enroulement 1 tourne autour de l'axe X-X et du tube fixe 101 grâce à deux liaisons pivot. Une couronne-palier 4, montée sur la périphérie extérieure du tube 101 à proximité de son extrémité 101B opposée à l'extrémité 101A, assure la première liaison pivot. La deuxième liaison pivot est installée à l'autre extrémité du tube 1 et n'est pas représentée.

L'actionneur 100 comprend également une pièce de fixation 110, faisant saillie à l'extrémité du tube 101 opposée à l'arbre de sortie 103 et permettant de fixer l'actionneur 100 sur un bâti 5. Cette pièce de fixation 110 est, en outre, destinée à obturer le tube 101 ainsi qu'à supporter un boîtier 120 dans lequel est logé une carte électronique 140 contrôlant l'alimentation du motoréducteur 102. Le sous-ensemble formé de la pièce de fixation 110 et du boîtier 120 équipé forme une cage 200.

Un câble d'alimentation secteur 104, comprenant trois conducteurs, traverse la pièce de fixation 110 et se connecte au boîtier 120 par le branchement d'un connecteur 105, monté à l'extrémité du câble 104, sur un connecteur 141, solidaire de la carte électronique 140. A l'autre extrémité de la carte électronique 140 se trouve un deuxième connecteur 142 sur lequel est branché un connecteur 151 d'extrémité d'un câble 150 d'alimentation du motoréducteur 102.

Ainsi, si la carte électronique reçoit un ordre de mouvement de l'actionneur, par exemple par radio, les conducteurs du câble 104 seront connectés aux conducteurs du câble 150 de manière à alimenter le motoréducteur 102 afin d'obtenir le mouvement souhaité. Ensuite, les conducteurs du câble 104 seront isolés afin d'arrêter le mouvement sur un ordre d'arrêt ou suite à une détection de fin de course.

Lors du fonctionnement de l'actionneur tubulaire 100, le motoréducteur 102 entraîne en rotation l'arbre 103 qui à son tour entraîne en rotation le tube 1 par l'intermédiaire de la couronne-roue 3. Par exemple, lorsque l'actionneur 100 est installé dans un caisson de volet roulant, la rotation de l'arbre 103 entraîne l'ouverture et, en alternance, la fermeture de l'ouverture O.

L'assemblage de la cage nécessite de rendre solidaire le boîtier 120 de la pièce de fixation 110. Pour cela, le boîtier comprend des clips 121 constitués chacun d'une patte élastique 122 et d'une protubérance 123 ménagée à l'extrémité libre de la patte 122. Des formes complémentaires aux clips 121 sont prévues sur la pièce de fixation 110, c'est à dire des logements 111 accueillant chacun la protubérance 123 d'un clip 121, celle-ci étant maintenue dans le logement correspondant grâce à une partie 112 en saillie disposée en extrémité de la pièce de fixation 110. Ainsi, la tenue axiale du boîtier 120 par rapport à la pièce de fixation 110 est assurée par le contact partiel entre la face 113 de la partie 112, coté logement 111, et la face 124 orientée vers le boîtier 120 de la protubérance 123 correspondante.

Lors du montage du boîtier 120 sur la pièce 110, chaque clip 121 s'ouvre, c'est-à-dire se dilate radialement. Grâce à la patte élastique 122, la protubérance 123 s'efface de la partie 112 lors d'un mouvement de translation axial du boîtier 120 dans le sens de la flèche F₁ à la figure 2. Dès que la protubérance 123 n'est plus au niveau de la partie 112 de la pièce de fixation, le clip 121 se referme. La patte élastique 122 joue son effet ressort en ramenant la protubérance 123 dans le logement 111 correspondant.

Une pente d'attaque 123A est ménagée sur la protubérance 123 afin de faciliter l'ouverture du clip 121 lors du rapprochement des pièces 110 et 120. Ceci n'est toutefois pas obligatoire.

Pour le démontage, il faut ouvrir de nouveau chaque clip 121 en écartant radialement sa protubérance 123 pour la dégager du logement 111 correspondant.

Que ce soit pour le montage ou le démontage, il est nécessaire de ne pas limiter le débattement du clip 121. Il faut que la protubérance 123 puisse s'échapper du logement, et plus particulièrement aller au-delà du bord radial externe de la partie 112. Ces opérations ne sont possibles que si le tube 101 n'est pas rapporté autour de la cage 200.

L'invention consiste à limiter ce débattement par l'ajout d'un moyen de verrouillage, une fois le tube 101 monté. Selon le mode de réalisation représenté, le moyen de verrouillage est constitué par la surface intérieure 101D du tube 101. La figure 2 illustre ce verrouillage. Pour des raisons de compréhension, la figure 2 n'est pas à l'échelle et la déformation du clip est exagérée.

En cas de choc axial, un effort F₂ est principalement exercé axialement sur le boîtier 120. Cet effort tend à désolidariser le boîtier 120 de la pièce de fixation 110. Le clip 121 tend à s'ouvrir car, en réalité, l'appui entre les faces 113 et 124 n'est jamais complètement perpendiculaire à la direction de l'effort F₂. Il peut même être prévu une légère inclinaison des surfaces 113 et 124 pour faciliter le déclipsage.

Un talon 125 est ménagé sur le clip 121 au dos de la patte 122 et à l'opposé de la protubérance 123. Si le clip 121 se déforme du fait du glissement des faces 113 et 124 l'une contre l'autre, en se dilatant radialement, le talon 125 vient en butée contre la surface interne 101D du tube 101, empêchant ainsi le clip 121 de s'ouvrir davantage. Ainsi, du fait de la mise en place de la cage 200, et plus particulièrement du boîtier 120, dans le tube 101, le débattement du clip 121 est limité de manière à ce que la protubérance 123 ne puisse échapper du logement 111. Le mouvement axial du boîtier 120 par rapport à la pièce de fixation 110 est donc bloqué. Ce blocage résulte d'un contact partiel entre les surfaces précédemment définies 113 et 124.

Il est à noter que le tube 101 est positionné et immobilisé par rapport à la pièce de fixation 110. Le positionnement entre ces deux pièces est obtenu par la liaison pivot définie entre une surface radiale externe 114 de la pièce 110 et la surface 101D du tube 101.

Il peut également être ménagé des formes sur la pièce de fixation 110 afin de permettre l'insertion d'un outil en vue de faciliter le déclippage. Par exemple, une forme de plat peut permettre le passage du plat d'un tournevis sous la protubérance 123 qui, par effet de levier, dégage la protubérance 123 du logement 111.

Selon une variante non représentée de l'invention, des clips de fixation similaires aux clips 121 peuvent être prévus sur la pièce 110, alors que des logements similaires aux logements 111 sont prévus sur le boîtier 120.

De même, le moyen de contrôle de l'alimentation de l'actionneur n'est pas nécessairement une carte électronique.

Lorsque la cage 200 est extraite du tube 101 pour une opération de maintenance, les clips 121 sont accessibles et peuvent être facilement déverrouillés en extrayant les protubérances 123 des logements 111 comme envisagé ci-dessus, la surface 101D ne s'opposant alors plus à cette extraction.

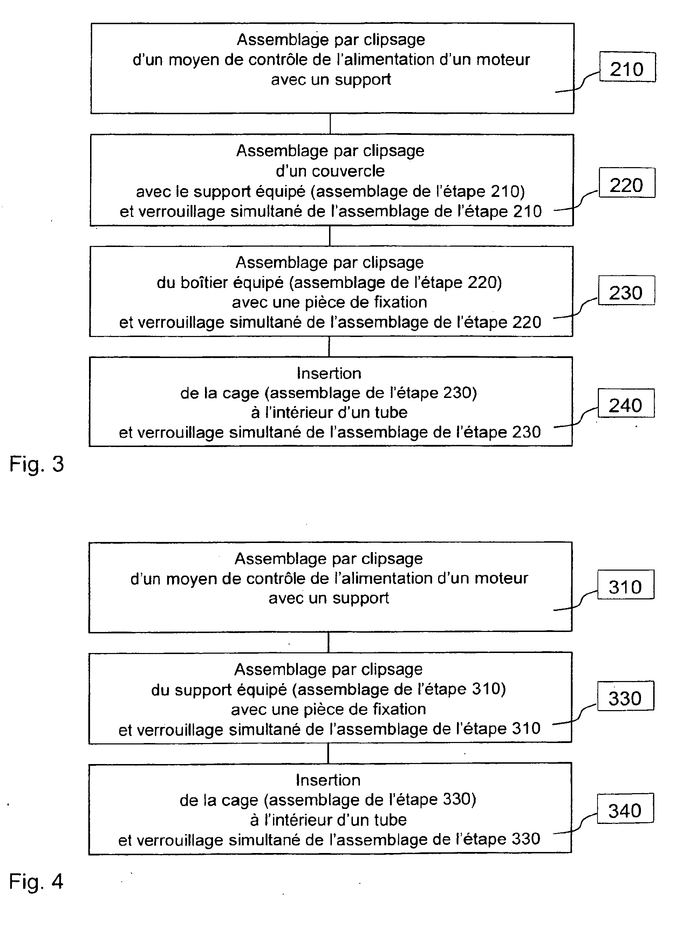

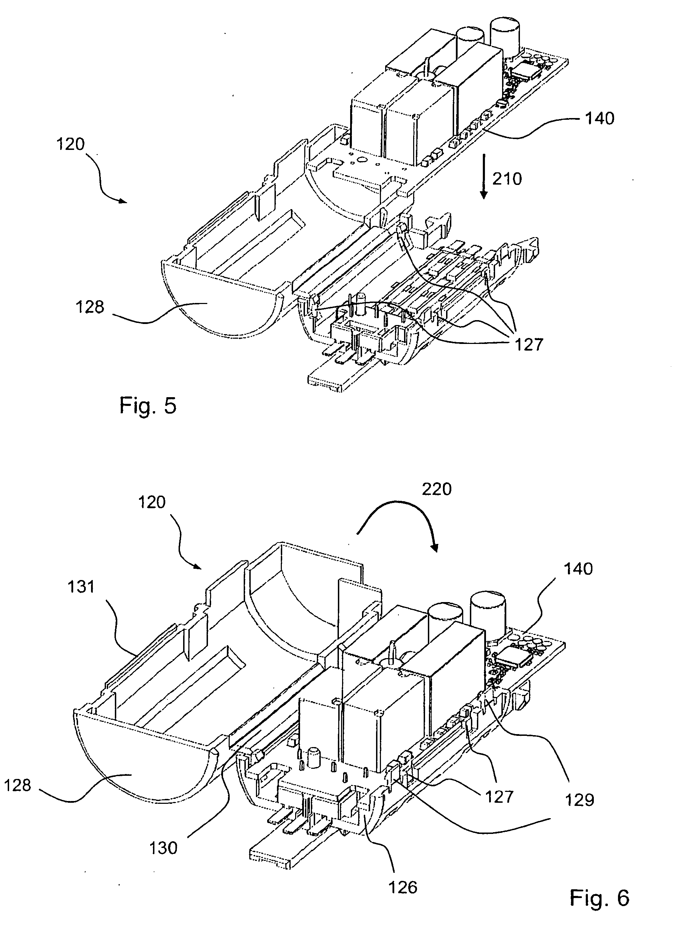

Un premier mode d'exécution du procédé d'assemblage de la cage 200 selon l'invention est décrit ci-après en référence à la figure 3 et aux figures 5 à 8

Dans une première étape 210, représentée à la figure 5, la carte de contrôle 140 de l'alimentation du moteur est montée dans un support 126 et maintenue en position grâce à des clips 127.

Dans une deuxième étape 220, représentée à la figure 6, un couvercle 128 est assemblé avec un support 126 équipé de la carte de contrôle 140 par le biais de clips 129. Selon le mode de réalisation illustré, le couvercle 128 et le support 126 sont reliés par une charnière 130 et forment une seule et même pièce constitutive du boîtier 120. Ces deux pièces peuvent également être distinctes. Le couvercle 128 est équipé de moyens de verrouillage, en l'espèce une nervure 131, destinés à empêcher la désolidarisation de l'assemblage effectué à l'étape 210, une fois le couvercle 128 assemblé avec le support équipé 126. En l'occurrence, la nervure 131 se positionne derrière certains des clips 127, ce qui a pour effet de limiter leur débattement et donc de verrouiller le clipsage de la carte 140 sur le support 126. Une fois en place, le couvercle 128 forme avec le support 126 le boîtier 120 qui isole et protège au moins une partie de la carte 140 de l'environnement extérieur. Dans le cas présent, ce sont les composants disposés sur la carte qui sont protégés par le couvercle.

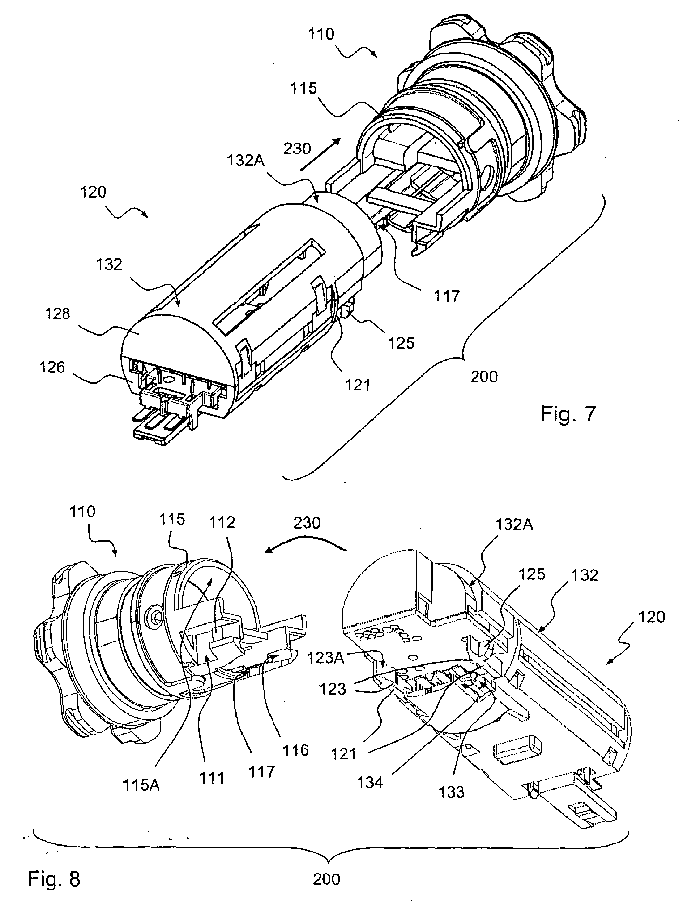

Dans une troisième étape 230, représentée aux figures 7 et 8, le boîtier équipé 120 est assemblé avec la pièce de fixation 110 par le biais des clips 121, comme décrit précédemment. Lors de l'assemblage de la cage 200, l'emboîtement d'une portion latérale 132A de la surface externe 132 du couvercle 128 avec une jupe 115 de la pièce de fixation 110, permet de solidariser le couvercle 128 avec la pièce de fixation 110. La partie 132A est alors entourée par la surface radiale interne 115A de la jupe 115. Par ailleurs, le support équipé 126 comprend des surfaces 133 et 134 s'emboîtant avec des surfaces complémentaires 116 et 117 disposées sur la pièce de fixation 110. Cet assemblage permet de solidariser en rotation le support équipé 126 de la carte 140 avec la pièce de fixation 110. Les clips 121 montés dans leurs logements peuvent également participer à rendre solidaire en rotation le support 126 avec la pièce de fixation car les clips 121 peuvent venir en butée contre les bords des logements 111. Ainsi, l'emboîtement du boîtier 120 avec la pièce de fixation 110 a pour effet de bloquer tout mouvement tendant à désassembler le couvercle 128 du support 126, ce qui se traduit par un blocage de la rotation du couvercle 128 autour de la charnière 130.

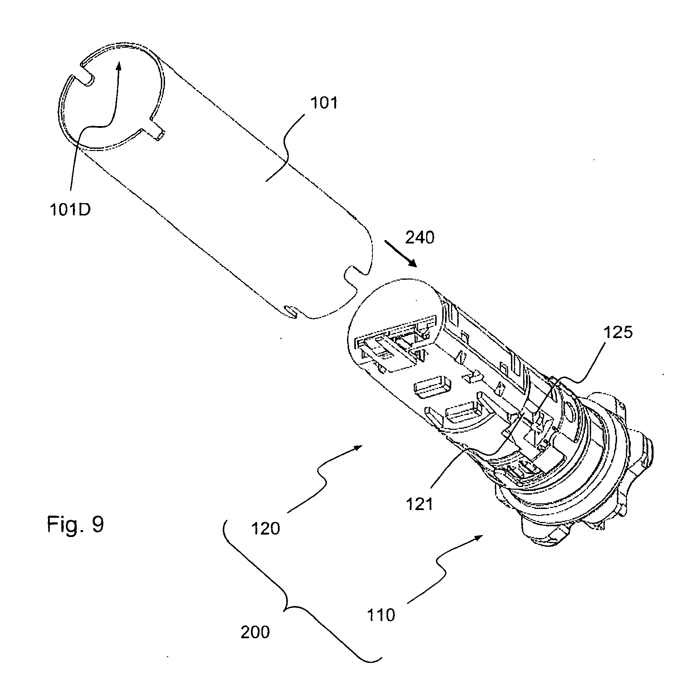

Dans une quatrième étape 240, représentée par une vue en perspective à la figure 9, la cage 200 est insérée dans le tube 101. Lorsque le tube 101 recouvre le boîtier équipé 120 et, plus particulièrement, les clips 121, l'assemblage effectué à l'étape 230 est verrouillé. Le principe de ce verrouillage est décrit précédemment. Le débattement des clips 121 est limité par la surface intérieure 101D du tube 101.

Au vu de ce qui précède, les moyens de verrouillage 131, 115 à 117, 132 à 134, 101 sont mis en oeuvre successivement pour sécuriser l'assemblage réalisé lors d'une étape précédente. Ainsi, la nervure 131 est utilisée à l'étape 220 pour verrouiller les clips 127 mis en oeuvre à l'étape 210. Les éléments 115 à 117 sont utilisés à l'étape 230 pour verrouiller la fermeture du couvercle 128 réalisée à l'étape 220. Le tube 101 est utilisé à l'étape 240 pour verrouiller l'accrochage des clips 121 dans les logements 111 qui a lieu à l'étape 230.

Lors de l'étape 230, les éléments 115 à 117 utilisés permettent d'empêcher le mouvement relatif entre le couvercle 128 et le support 126 équipé de la carte 140. Dans le mode de réalisation décrit, ce mouvement relatif est une rotation autour de la charnière 130 reliant le couvercle 128 au support équipé 126. Dans le cas où le couvercle 128 est indépendant du support équipé 126, le mouvement bloqué peut être un mouvement de translation.

Une variante à ce procédé d'assemblage consiste à supprimer l'étape 220. Il n'est pas forcément nécessaire de protéger le support équipé 126 d'un couvercle 128. Cette alternative est illustrée par l'ordinogramme de la figure 4.

La première étape 310 correspond à l'étape 210.

Dans une deuxième étape 330, le support équipé 126, qui forme le boîtier 120, est directement clippé sur la pièce de fixation 110. Des moyens de verrouillage de l'assemblage effectué à l'étape 310 sont donc prévus. Ce peut être le blocage du débattement des clips 127, le blocage du mouvement relatif entre le moyen de contrôle 140 et son support ou une autre solution analogue.

L'étape suivante 340 est identique à l'étape 240.

Dans ce second procédé d'assemblage, des moyens de verrouillage sont également utilisés pour fiabiliser à chaque étape l'assemblage réalisé lors de l'étape précédente.

Selon une variante non représentée de l'invention, des moyens équivalents à la nervure 131 sont activés lorsque le boîtier 120 est introduit dans le tube 101. Ces moyens peuvent être constitués par la surface 101D du tube 101.

L'invention a été décrite dans le cas de son utilisation pour la manoeuvre d'un volet roulant. Elle est également applicable à la manoeuvre d'un store et, plus généralement, de tout écran domotique de fermeture, de protection solaire ou de projection, par exemple de photos ou de films.

## Revendications

1. Actionneur tubulaire (100) d'entraînement d'un écran domotique (2) comprenant :
- une pièce de fixation (110), permettant de rendre solidaire l'actionneur avec un bâti (5) et partiellement disposée à l'intérieur d'un tube (101) appartenant à l'actionneur,
- un boîtier (120) dans lequel est logé au moins une partie (140) de contrôle de l'alimentation d'un moteur (102) appartenant à l'actionneur, le boîtier et le moteur étant disposés à l'intérieur du tube (101),
- des moyens (121) d'assemblage de la pièce de fixation et du boîtier (120),
**caractérisé en ce qu'**il comprend un moyen (101D) de verrouillage des moyens d'assemblage (121), en configuration de solidarisation de la pièce de fixation (110) et du boîtier (120), lorsque le boîtier est en place dans le tube (101).

2. Actionneur tubulaire selon la revendication 1, **caractérisé en ce que** les moyens de verrouillage (101 D) ne sont pas actifs lorsque le boîtier (120) est disposé à l'extérieur du tube (101).

3. Actionneur tubulaire selon l'une des revendications précédentes, **caractérisé en ce que** le moyen de verrouillage est constitué par une partie (101 D) du tube (101).

4. Actionneur tubulaire selon l'une des revendications précédentes, **caractérisé en ce que** les moyens d'assemblage sont constitués d'au moins un clip (121), solidaire d'un premier élément (120) parmi le boîtier (120) et la pièce de fixation (110), ce clip coopérant avec un logement d'accroche (111) ménagé sur le deuxième élément (110) parmi la pièce de fixation (110) et le boîtier (120), de manière à maintenir le boîtier assemblé à la pièce de fixation.

5. Actionneur tubulaire selon la revendication 4, **caractérisé en ce que** le clip (121) comprend un talon (125) disposé de manière à venir en appui contre la surface intérieure (101D) du tube (101), qui forme le moyen de verrouillage, lorsque le boîtier (120) et la pièce de fixation (110) sont soumis à un effort (F₂) de désolidarisation.

6. Actionneur tubulaire selon l'une des revendications 4 ou 5, **caractérisé en ce que** le clip (121) comprend une patte élastique (122) et une protubérance (123) ménagée à une extrémité libre de la patte, la protubérance étant conformée et orientée pour être engagée dans le logement (111) en configuration verrouillée du clip.

7. Actionneur tubulaire selon la revendication 6, **caractérisé en ce que** la protubérance (123) est pourvue d'une pente d'attaque (123A) destinée à faciliter la déformation radiale de la patte (122) lors de la solidarisation (F₁) du boîtier (120) et de la pièce de fixation (110).

8. Actionneur tubulaire selon l'une des revendications précédentes, **caractérisé en ce qu'**il comprend des moyens (131) d'immobilisation de la partie de contrôle (140) dans ou sur le boîtier (120), ces moyens d'immobilisation étant activés avant que le boîtier soit mis en place dans le tube (101) ou lorsque le boîtier est mis en place dans le tube.

9. Procédé de fabrication d'un actionneur tubulaire (100) comprenant une pièce de fixation (110), permettant de rendre solidaire l'actionneur avec un bâti (5) et partiellement disposée à l'intérieur d'un tube (101) appartenant à l'actionneur, et un boîtier (120), dans lequel est logée au moins une partie (140) de contrôle de l'alimentation d'un moteur (102), le boîtier et le moteur étant disposés à l'intérieur du tube, **caractérisé en ce qu'**il comprend des étapes consistant à :
a) assembler (230 ; 330), au moyen de clips élastiques (121) formant moyens d'assemblage, la pièce de fixation (110) et le boîtier (120) et
b) insérer (240 ; 340) l'assemblage (200) formé à l'étape précédente dans le tube (101), en verrouillant les clips (121) en configuration de solidarisation de la pièce de fixation et du boîtier, grâce à un moyen de verrouillage (101 D) de ces clips (121).

10. Procédé selon la revendication 9, **caractérisé en ce qu'**il comprend des étapes antérieures aux étapes a) et b) et consistant à :
c) assembler par clipsage (210) la partie de contrôle (140) et un support (126)
d) assembler par clipsage (220) un couvercle (128) sur le support (126) équipé de la partie de contrôle (140), en mettant en oeuvre des moyens (131) de verrouillage de la partie de contrôle sur le support,
alors que, lors de l'étape a) (230), on met en oeuvre des moyens (115-117, 132A, 133, 134) de verrouillage du couvercle (128) sur le support (126).

11. Procédé selon la revendication 9, **caractérisé en ce qu'**il comprend une étape antérieure aux étapes a) et b) et consistant à :
c') assembler par clipsage (310) la partie de contrôle (140) et un support (126),
alors que, lors de l'étape a) (330), on met en oeuvre des moyens de verrouillage de la partie de contrôle (140) sur le support (126).

## Claims

1. Tubular actuator (100) driving an automated home screen (2) comprising
- a fixing part (110) allowing the actuator to be joined to a frame (5) and arranged partly inside a tube (101) also belonging to the actuator;
- a case (120) in which at least one part (140) controlling the power supply of a motor (102) belonging to the actuator is housed, the case and the motor being arranged inside the tube (101);
- means (121) for assembling the fixing part and the case (120);
**characterized in that** it comprises a means (101D) of locking the assembly means (121), in a configuration joining the fixing part (110) and the case (120), when the case is in place in the tube (101).

2. Tubular actuator according to Claim 1, **characterized in that** the locking means (101D) are not active when the case (120) is positioned outside the tube (101).

3. Tubular actuator according to either of the preceding claims, **characterized in that** the locking means is constituted by a part (101D) of the tube (101).

4. Tubular actuator according to one of the preceding claims, **characterized in that** the assembly means consist of at least one clip (121) joined to a first element (120), from among the case (120) and the fixing part (110), this clip interacting with a hook housing (111) arranged on the second element (110), among the fixing part (110) and the case (120) in such a way as to keep the case attached to the fixing part.

5. Tubular actuator according to Claim 4, **characterized in that** the clip (121) comprises a heel (125) arranged so as to press against the inside surface (101D) of the tube (101), which forms the locking means, when the case (120) and the fixing part (110) are subjected to a disconnecting force (F₂).

6. Tubular actuator according to either of Claims 4 or 5, **characterized in that** the clip (121) comprises an elastic hook (122) and a protuberance (123) arranged at a free end of this hook, the protuberance being shaped and oriented so as to latch into the housing (111), in the locked configuration of the clip.

7. Tubular actuator according to Claim 6, **characterized in that** the protuberance (123) is provided with a leading slope (123A) designed to facilitate radial deformation of the hook (122) when joining (F₁) the case (120) and the fixing part (110).

8. Tubular actuator according to one of the preceding claims, **characterized in that** it comprises means (131) for immobilizing the control part (140) in or on the case (120), these immobilization means being activated before the case is put in place in the tube (101) or when the case is put in place in the tube.

9. Method of manufacturing a tubular actuator (100) comprising a fixing part (110) allowing the actuator to be joined to a frame (5) and arranged partly inside a tube (101) belonging to the actuator, and a case (120) in which at least one part (140) controlling the power supply of a motor (102) is housed, the case and the motor being arranged inside the tube (101), **characterized in that** it comprises steps consisting in:
a) attaching (230, 330) the fixing part (110) and the case (120) by means for elastic clips (121) forming assembly means;
b) inserting (240, 340) the assembly (200) formed in the preceding step in the tube (101), while locking the clips (121) in the configuration joining the fixing part and the case, thanks to a means (101D) of locking of these chips (121).

10. Method according to Claim 9, **characterized in that** it comprises steps prior to steps a) and b) and consisting in:
c) attaching the control part (140) and a support (126) using clips (210); and
d) attaching a cover (128) on the support (126) equipped with the control part (140) using clips (220), while implementing means (131) for locking the control part on the support,
while, during step a) (230), one makes use of the means (115-117, 132A, 133, 134) for locking the cover (128) on the support (126).

11. Method according to Claim 9, **characterized in that** it comprises a step prior to steps a) and b) and consisting in:
c') attaching the control part (140) and a support (126) using clips (310);
while, during step a), (330), one makes use of the means for locking the control part (140) on the support (126).

## Patentansprüche

1. Röhrenförmiges Betätigungsgerät (100) zum Antrieb eines automatisierten Hausschirms (2), umfassend:
- ein Befestigungsteil (110), das gestattet, das Betätigungsgerät mit einem Rahmenwerk (5) zusammenhaltend zu machen, und teilweise innerhalb einer zum Betätigungsgerät gehörigen Röhre (101) angeordnet ist,
- ein Gehäuse (120), in dem zumindest ein Steuerungsteil (140) für eine Stromversorgung eines zum Betätigungsgerät gehörigen Motors (102) untergebracht ist, wobei das Gehäuse und der Motor innerhalb der Röhre (101) angeordnet sind,
- Verbindungsmittel (121) zum Verbinden des Befestigungsteils und des Gehäuses (120),
**dadurch gekennzeichnet, dass** es ein Verriegelungsmittel (101D) umfasst zum Verriegeln der Verbindungsmittel (121) in einer Konfiguration des Zusammenhalts des Befestigungsteils (110) und des Gehäuses (120), wenn das Gehäuse in der Röhre (101) eingebaut ist.

2. Röhrenförmiges Betätigungsgerät nach Anspruch 1, **dadurch gekennzeichnet, dass** die Verriegelungsmittel (101D) nicht aktiv sind, wenn das Gehäuse (120) außerhalb der Röhre (101) angeordnet ist.

3. Röhrenförmiges Betätigungsgerät nach einem der vorhergehenden Ansprüche, **dadurch gekennzeichnet, dass** das Verriegelungsmittel durch ein Teil (101D) der Röhre (101) gebildet ist.

4. Röhrenförmiges Betätigungsgerät nach einem der vorhergehenden Ansprüche, **dadurch gekennzeichnet, dass** die Verbindungsmittel gebildet sind aus zumindest einem Clip (121) aus einem Stück mit einem ersten Element (120) aus dem Gehäuse (120) und dem Befestigungsteil (110), wobei dieser Clip derart mit einer Aufnahme (111) zum Einhängen, die auf dem zweiten Element (110) aus dem Gehäuse (120) und dem Befestigungsteil (110) ausgespart ist, zusammenwirkt, dass das Gehäuse mit dem Befestigungsteil zusammengehalten wird.

5. Röhrenförmiges Betätigungsgerät nach Anspruch 4, **dadurch gekennzeichnet, dass** der Clip (121) einen Ansatz (125) umfasst, der derart angeordnet ist, dass er gegen die innere Oberfläche (101D) der Röhre (101), die das Verriegelungsmittel bildet, in Anlage kommt, wenn das Gehäuse (120) und das Befestigungsteil (110) einer sie trennenden Kraft (F₂) ausgesetzt werden.

6. Röhrenförmiges Betätigungsgerät nach einem der Ansprüche 4 oder 5, **dadurch gekennzeichnet, dass** der Clip (121) eine elastische Lasche (122) und einen an einem freien Ende der Lasche angeordneten Höcker (123) umfasst, wobei der Höcker angepasst und orientiert ist zum Eingreifen in die Aufnahme (111) in verriegelter Konfiguration des Clips.

7. Röhrenförmiges Betätigungsgerät nach Anspruch 6, **dadurch gekennzeichnet, dass** der Höcker (123) mit einer Eingriffsschräge (123A) versehen ist, die dazu bestimmt ist, die radiale Deformation der Lasche (122) bei der Verbindung (F₁) des Gehäuses (120) und des Befestigungsteils (110) zu erleichtern.

8. Röhrenförmiges Betätigungsgerät nach einem der vorhergehenden Ansprüche, **dadurch gekennzeichnet, dass** es Blockiermittel (131) zum Blockieren des Steuerungsteils (140) in oder auf dem Gehäuse (120) umfasst, wobei diese Blockiermittel aktiviert werden, bevor das Gehäuse in die Röhre (101) eingebaut wird oder wenn das Gehäuse in die Röhre eingebaut wird.

9. Verfahren zum Herstellen eines röhrenförmigen Betätigungsgeräts (100), umfassend ein Befestigungsteil (110), das das Betätigungsgerät mit einem Rahmenwerk (5) zusammenhaltend zu machen gestattet und teilweise innerhalb einer zum Betätigungsgerät gehörigen Röhre (101) angeordnet ist, und ein Gehäuse (120), in dem zumindest ein Steuerungsteil (140) für eine Stromversorgung eines Motors (102) untergebracht ist, wobei das Gehäuse und der Motor innerhalb der Röhre (101) angeordnet sind, **dadurch gekennzeichnet, dass** es Schritte umfasst, die bestehen in:
a) Zusammenfügen (230; 330) des Befestigungsteils (110) und des Gehäuses (120) mittels Verbindungsmittel bildender elastischer Clips (121) und
b) Einsetzen (240; 340) des beim vorhergehenden Schritt gebildeten Verbunds (200) in die Röhre (101), wobei die Clips (121) in einer Konfiguration des Zusammenhalts des Befestigungsteils und des Gehäuses verriegelt werden durch ein Verriegelungsmittel (101D) dieser Clips (121).

10. Verfahren nach Anspruch 9, **dadurch gekennzeichnet, dass** es Schritte umfasst, die den Schritten a) und b) vorangehen und die bestehen in:
c) Zusammenfügen des Steuerungsteils (140) und einer Auflage (126) durch eine Clipverbindung (210)
d) Montieren einer Abdeckung (128) auf der mit dem Steuerungsteil (140) bestückten Auflage (126) durch eine Clipverbindung (220), indem Mittel (131) zum Verriegeln des Steuerungsteils auf der Auflage eingesetzt werden,
wobei bei Schritt a) (230) Mittel (115-117, 132A, 133, 134) zum Verriegeln der Abdeckung (128) auf der Auflage (126) eingesetzt werden.

11. Verfahren nach Anspruch 9, **dadurch gekennzeichnet, dass** es einen Schritt umfasst, der den Schritten a) und b) vorangeht und besteht in:
c') Zusammenfügen des Steuerungsteils (140) und einer Auflage (126) durch eine Clipverbindung (310),
wobei bei Schritt a) (330) Mittel zum Verriegeln des Steuerungsteils (140) auf der Auflage (126) eingesetzt werden.
